# EUROPEAN PATENT APPLICATION

(11) **EP 4 227 199 A1**
(43) Date of publication of application: **16.08.2023**
(21) Application number: 23154676.3
(22) Date of filing: 02.02.2023
(51) Int. Cl.: B62K 21/14, F16F 1/376, F16F 1/377, B62J 45/413, B62J 45/422

(54) **VIBRATION ISOLATOR**

(30) Priority: 10.02.2022 JP 2022019224
(71) Applicant: TOYO DENSO KABUSHIKI KAISHA, Minato-ku Tokyo 105-0004 (JP)
(72) Inventor: KISHI, Shoji, Saitama, 350-2280 (JP); YOSHIDA, Toshiya, Saitama, 350-2280 (JP); OTANI, Takayuki, Saitama, 350-2280 (JP)
(74) Representative: Betten & Resch

(57) **Abstract**

A vibration isolator (1) according to the present invention includes: an annular main body (10) that is made of an annular elastic member, arranged surrounding at least part of a component (20) housed inside a handlebar (30), and housed inside the handlebar together with the component; a plurality of protrusions (11) that are formed on an outer peripheral surface of the annular main body, protruding so as to abut on an inner surface of the handlebar; and a plurality of recesses (12) that are formed on an inner peripheral surface of the annular main body, recessed toward the outer peripheral surface.

## Description

### INCORPORATION BY REFERENCE

This application is based upon and claims the benefit of priority from Japanese patent application No. 2022-019224, filed on February 10, 2022, the disclosure of which is incorporated herein in its entirety by reference.

### TECHNICAL FIELD

The present invention relates to a vibration isolator mounted inside a handlebar.

### BACKGROUND ART

A vehicle which has a handlebar, such as a motorcycle, is equipped with, for example, an internal component forming a throttle device inserted and mounted inside the handlebar. For example, an accelerator position sensor is mounted as an internal component inside the handlebar. Since such an internal component requires vibration isolation, an annular vibration isolator that surrounds the internal component and abuts on the inner periphery of the handlebar is mounted.

Patent Document 1 describes a vibration isolator mounted inside a handlebar as described above. The vibration isolator is formed by an annular elastic member and is shaped like a gear with a plurality of protrusions provided on the outer periphery thereof. Consequently, the vibration isolator can change its shape in a direction to compress the protrusions, and can exhibit a vibration isolation effect.

Patent Document 1: Japanese Unexamined Patent Application Publication No. JP-A2015-058854

However, since the vibration isolator described above merely has a gear-like shape with the protrusions on the outer periphery of the annular elastic member, the spring constant of the protrusions is high, resulting in occurrence of a problem that it is difficult to install inside the handlebar. Moreover, the protrusions may fall over when installed, and a vibration isolation effect by such protrusions is not exhibited, resulting in occurrence of a problem that performance deteriorates.

### SUMMARY OF THE INVENTION

Accordingly, an object of the present invention is to solve the abovementioned problems, that is, the problem of difficulty of attachment and the problem of deterioration of performance of a vibration isolator inserted to be inside a handlebar.

A vibration isolator as an aspect of the present invention includes: an annular main body that is made of an annular elastic member, arranged surrounding at least part of a component housed inside a handlebar, and housed inside the handlebar together with the component; a plurality of protrusions that are formed on an outer peripheral surface of the annular main body, protruding so as to abut on an inner surface of the handlebar; and a plurality of recesses that are formed on an inner peripheral surface of the annular main body, recessed toward the outer peripheral surface.

Further, a steering as an aspect of the present invention includes a handlebar, a housed component housed inside the handlebar, and a vibration isolator arranged surrounding at least part of the housed component and housed inside the handlebar together with the housed component. The vibration isolator includes: an annular main body made of an annular elastic member; a plurality of protrusions that are formed on an outer peripheral surface of the annular main body, protruding so as to abut on an inner surface of the handlebar; and a plurality of recesses that are formed on an inner peripheral surface of the annular main body, recessed toward the outer peripheral surface.

With the configurations as described above, the present invention facilitates attachment of a vibration isolator to be inserted inside a handlebar, and enables exhibition of stable vibration isolation performance.

### BRIEF DESCRIPTION OF DRAWINGS

Fig. 1 is a figure showing how a vibration isolator is installed into a handlebar in a first example embodiment of the present invention;
Fig. 2 is a figure showing the vibration isolator installed into the handlebar shown in Fig. 1, taken from the axial direction of the handlebar;
Fig. 3 is a perspective view of the vibration isolator disclosed in Fig. 1;
Fig. 4 is a cross-section view of the vibration isolator disclosed in Fig. 1;
Fig. 5 is a figure for describing the shape of the vibration isolator disclosed in Fig. 1; and
Fig. 6 is a figure for describing an operation of the vibration isolator disclosed in Fig. 1.

### EXAMPLE EMBODIMIENT

### <First Example Embodiment>

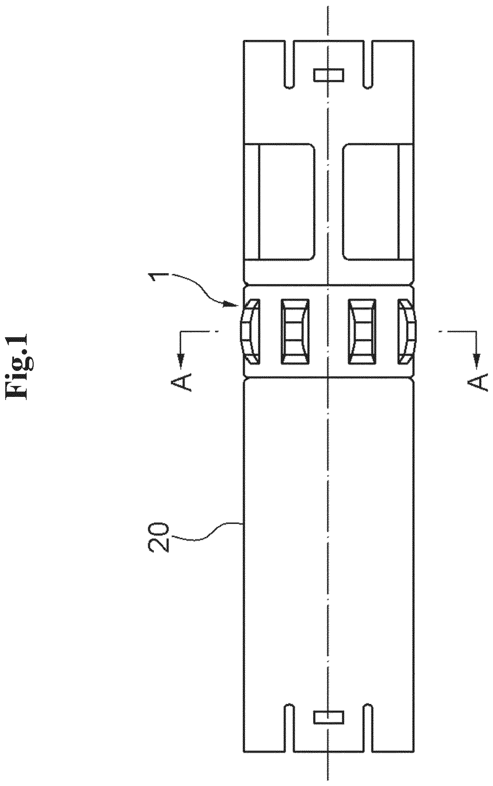

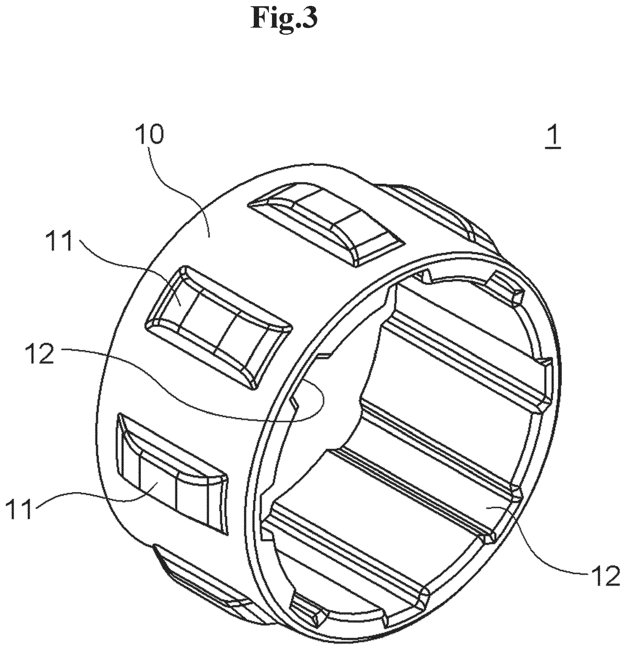

A first example embodiment of the present invention will be described with reference to Figs. 1 to 6. Figs. 1 to 2 are figures showing how a vibration isolator is installed into a handlebar, and Figs. 3 to 6 are figures for describing a configuration and an operation of the vibration isolator.

The vibration isolator according to the present invention is arranged to surround an internal component inserted into a handlebar of a motorcycle or the like, and is inserted into the handlebar together with the internal component. In this example embodiment, as shown in Fig. 1, the internal component inserted into the handlebar is an accelerator position sensor 20 that forms a throttle device, and a vibration isolator 1 surrounding the accelerator position sensor 20 will be described as an example. However, the vibration isolator 1 is not limited to being installed on the accelerator position sensor, and may be installed on any component such as an inner weight that suppresses resonance of the handlebar.

As shown in Fig. 1, the accelerator position sensor 20 on which the vibration isolator 1 is installed is formed in a cylindrical shape having a predetermined length along the axial direction (dashed-and-dotted line) of the handlebar. On part of the outer peripheral surface in the longitudinal direction of the accelerator position sensor 20, an annular recess (not shown) that is uniformly recessed along the circumferential direction is formed. The vibration isolator 1 is arranged so that the inner peripheral side thereof is fitted into the annular recess. The accelerator position sensor 20 with the vibration isolator 1 installed is inserted into the handlebar, which is not shown in Fig. 1.

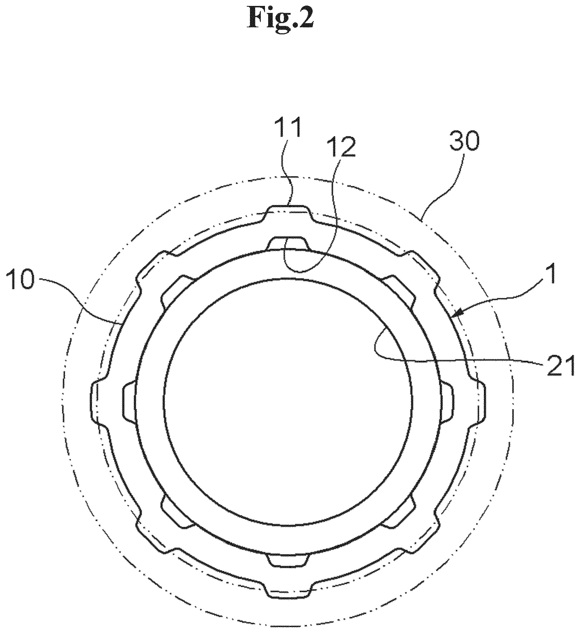

Fig. 2 is a cross-section view of the accelerator position sensor 20 with the vibration isolator 1 installed shown in Fig. 1, viewed from the axial direction of the handlebar 30 (a cross-section view taken along line A-A in Fig. 1). As shown in this figure, the vibration isolator 1 is installed in a manner that part of the inner peripheral surface thereof abuts on the outer periphery of a case 21 of the accelerator position sensor 20. When the vibration isolator 1 is inserted into the handlebar 30, part of the outer peripheral surface of the vibration isolator 1 abuts on the inner peripheral surface of the handlebar 30. In Fig. 2, the outer periphery of the vibration isolator 1 overlaps the inner peripheral surface of the handlebar 30. However, as will be described later, the vibration isolator 1 changes its shape with such a structure, and the vibration isolator 1 and the handlebar 30 thereby come in close contact with each other.

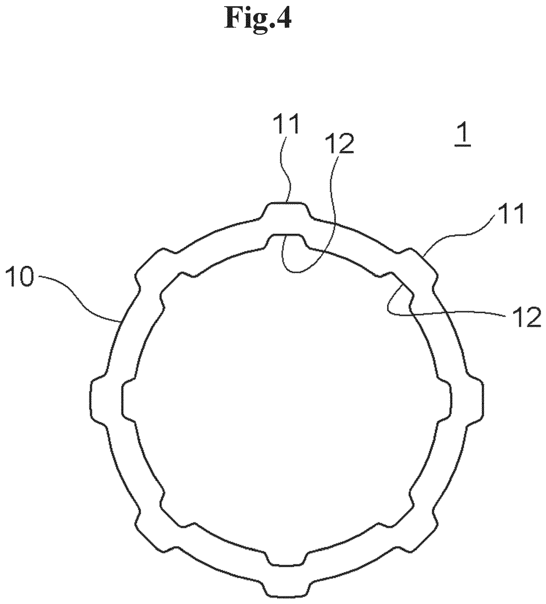

Fig. 3 is a perspective view of the vibration isolator 1, and Fig. 4 is a cross-section view of the vibration isolator 1 viewed from the axial direction of the handlebar. As shown in Figs. 3 and 4, the vibration isolator 1 is formed by an annular main body 10 made of an annular elastic member. In particular, the annular main body 10 is made of an elastic member such as rubber, silicone and elastomer, which has a property of changing its shape by an external force and returning to its original shape when the external force is removed.

Further, the vibration isolator 1 includes a plurality of protrusions 11 projecting further outward on the outer peripheral surface of the annular main body 10. The protrusions 11 are arranged and formed at approximately equal intervals along the circumferential direction of the annular main body 10. For example, in this example embodiment, as shown in Fig. 4, eight protrusions 11 are arranged at intervals of 45 degrees. However, the number and interval of the protrusions 11 are not limited to those of the example in Fig. 4, and the protrusions 11 do not necessarily need to be arranged at regular intervals.

Further, as shown in Fig. 3, the protrusion 11 is formed except the vicinities of both ends in the width direction of the annular main body 10 corresponding to the axial direction of the handlebar 30. That is to say, the outer surface of the annular main body 10 forms a flat circumferential surface without unevenness in the vicinities of both the ends in the width direction, whereas has the protrusion 11 formed inward by a predetermined distance from each of both the ends in the width direction. Moreover, the protrusion 11 is formed to gradually rise toward the center of the protrusion 11 from both end portions of the protrusion 11 in the width direction of the annular main body 10. That is to say, the protrusion 11 is formed in a flat mountain shape near the center when the annular main body 10 is viewed from the width direction thereof.

Furthermore, as shown in Fig. 4, the protrusion 11 has a substantially trapezoidal outer shape in the cross section near the center in the width direction of the annular main body 10. That is to say, the side face of the protrusion 11 extending along the width direction of the annular main body 10 is formed to be inclined, and the width of the protrusion 11 located in the circumferential direction gradually decreases toward the projection end face of the protrusion 11. The projection end face of the protrusion 11 is formed to be substantially flat.

Further, as shown in Figs. 3 and 4, the vibration isolator 1 includes a plurality of recesses 12 formed to be recessed toward the outer peripheral surface, on the inner peripheral surface of the annular main body 10. The recesses 12 are arranged and formed at approximately equal intervals along the circumferential direction of the annular main body 10. In particular, in this example embodiment, each recess 12 is formed with respect to each protrusion 11 described above so as to correspond to the formation location of the protrusion 11, and is formed on the inner peripheral surface side, that is, the rear face side of the formation location of the protrusion 11 of the annular main body 10. For example, in this example embodiment, as shown in Fig. 4, eight recesses 12 are arranged at intervals of 45 degrees. However, the number and interval of the recesses 12 are not limited to those of the example in Fig. 4, and the recesses do not necessarily need to be arranged at regular intervals. Moreover, the recesses 12 are not necessarily limited to being formed on the rear face sides of the protrusions 11, and may not be formed so as to correspond to the protrusions 11. The number of the recesses 12 may be different from the number of the protrusions 11.

Further, as shown in Fig. 3, the recess 12 is formed uniformly along the width direction of the annular main body 10. That is to say, the recess 12 is formed in a linear groove shape on the inner peripheral surface of the annular main body 10. Unlike the protrusion 11 described above, the recess 12 is formed up to the vicinity of the end portion in the width direction of the annular main body 10, and is formed in a recessed shape having a fixed depth along the width direction.

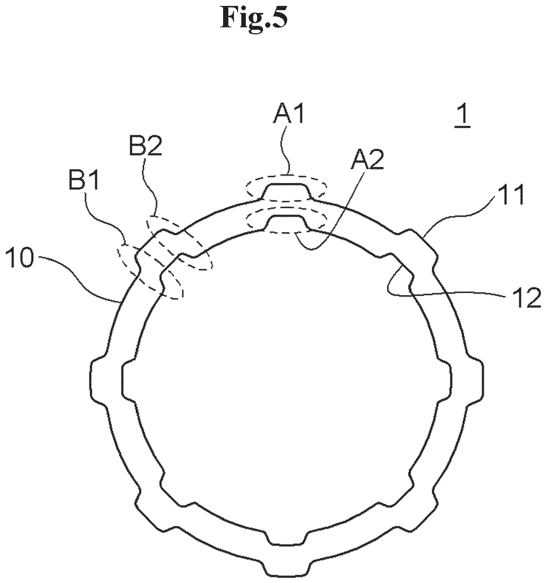

Furthermore, as shown in Fig. 4, the recess 12 has a substantially trapezoidal outer shape in the cross section near the center in the width direction of the annular main body 10. That is to say, the inner side face of the recess 12 extending along the width direction of the annular main body 10 is formed to be inclined, and is formed in a manner that the width of the recess 12 located in the circumferential direction gradually narrows toward the inner bottom face of the recess 12. The inner bottom face of the recess 12 is formed to be substantially flat. Therefore, as shown in Fig. 5, an outer shape A2 of the recess 12 and an outer shape A1 of the protrusion 11 are formed in substantially the same trapezoidal shape. Consequently, the entire vibration isolator 1 can be formed with a substantially uniform thickness, and unintended deformation and breakage can be suppressed. Moreover, the thickness of the annular main body 10 near both the ends of the protrusion 11 and the protrusion 12 corresponding to each other in the circumferential direction of the annular main body 10 indicated by symbols B 1 and B2 in Fig. 5 is made to be thinner than the other part. That is to say, the thickness between the inclined portions of the protrusion 11 and the recess 12 corresponding to each other is made to be thinner than the thickness between the projecting end face of the protrusion 11 formed substantially flat and the inner bottom face of the recess 12 formed substantially flat, and thinner than the thickness between the protrusions. As will be described later, this reduces a force required for shear deformation of such portions.

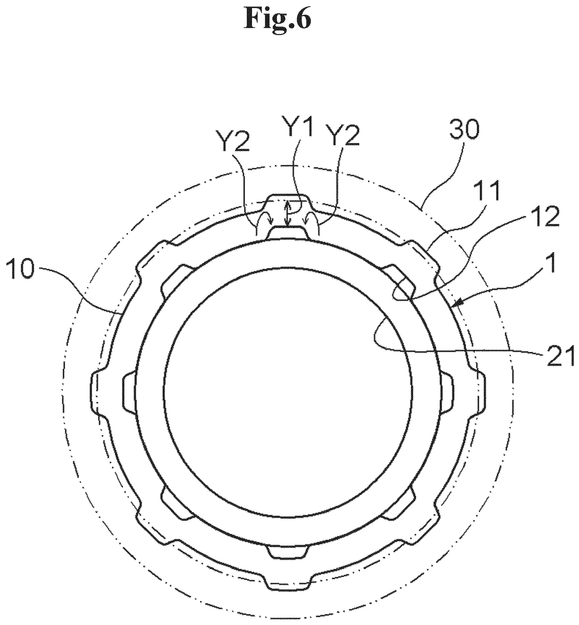

Next, how the accelerator position sensor 20 with the vibration isolator 1 having the abovementioned structure installed is inserted into the handlebar 30 will be described with reference to Fig. 6. Since the outer diameter of the protrusion 11 of the vibration isolator 1 is slightly larger than the inner diameter of the handlebar 30, the protrusion 11 of the vibration isolator 1 is radially compressed and deformed as indicated by arrow Y1 when the vibration isolator 1 is inserted into the handlebar 30. At the time, since the recess 12 is formed on the inner surface side of the protrusion 11, the periphery of the protrusion 11 is easy to be deformed in the shear direction as indicated by arrow Y2. Therefore, attachment of the vibration isolator 1 is facilitated. In this manner, the vibration isolator 1 is brought into close contact with the inner surface of the handlebar 30 by the protrusions 11.

When the handlebar 30 vibrates, the protrusions 11 of the vibration isolator 1 are compressed and restored in the direction of arrow Y1, thereby reciprocally changing the shapes. At the time, in particular, since the recess 12 is formed on the inner surface side of the protrusion 11, the periphery of the protrusion 11 is easily deformed in the shear direction as indicated by arrow Y2. Consequently, by using the vibration isolator 1 according to the present invention, a higher vibration isolation effect can be exhibited, and increase of the performance can be achieved. In particular, as described above, by forming the recess 12 at a position corresponding to the protrusion 11, making the outer shapes of the protrusion 11 and the recess 12 the same, and making a portion between the inclined portions of the protrusion 11 and the recess 12 thin, deformation of the protrusion 11 in the compression direction and deformation of the periphery thereof in the shear direction are facilitated, so that a higher vibration isolation effect can be exhibited and the performance can be further increased. Since the abovementioned shape makes it possible to increase the vibration isolation performance of the vibration isolator 1, it is also possible to make the entire vibration isolator 1 thinner, that is, smaller in size.

By housing a component such as the accelerator position sensor 20 with the vibration isolator 1 installed inside the handlebar 30 as described above, a steering of a vehicle such as a motorcycle can be manufactured. However, a component on which the vibration isolator 1 described above is installed is not limited to the accelerator position sensor 20, and may be any component.

### <Supplementary Notes>

The whole or part of the example embodiments disclosed above can be described as the following supplementary notes. Below, the overview of a vibration isolator and a steering according to the present invention will be described. However, the present invention is not limited to the following configurations.

### (Supplementary Note 1)

A vibration isolator comprising:
an annular main body made of an annular elastic member, the annular main body being arranged surrounding at least part of a component housed inside a handlebar, the annular main body being housed inside the handlebar together with the component;
a plurality of protrusions formed on an outer peripheral surface of the annular main body, the protrusions protruding so as to abut on an inner surface of the handlebar; and
a plurality of recesses formed on an inner peripheral surface of the annular main body, the recesses being recessed toward the outer peripheral surface.

### (Supplementary Note 2)

The vibration isolator according to Supplementary Note 1, wherein
each of the recesses is, for one of the protrusions, formed corresponding to a part where the protrusion is formed.

### (Supplementary Note 3)

The vibration isolator according to Supplementary Note 2, wherein
the recesses are formed on the inner peripheral surface at parts where the protrusions are formed of the annular main body.

### (Supplementary Note 4)

The vibration isolator according to Supplementary Note 3, wherein
the recesses and the protrusions are formed in substantially same outer shapes.

### (Supplementary Note 5)

The vibration isolator according to Supplementary Note 4, wherein
a thickness of the annular main body in vicinities of both ends of the protrusion and the recess corresponding to each other in a circumferential direction of the annular main body is thinner than that of another part.

### (Supplementary Note 6)

The vibration isolator according to Supplementary Note 4 or 5, wherein
the protrusions and the recesses are formed arranged at substantially equal intervals along a circumferential direction of the annular main body.

### (Supplementary Note 7)

The vibration isolator according to any of Supplementary Notes 1 to 6, wherein
the protrusion is formed except vicinities of both ends in a width direction of the annular main body, the width direction corresponding to an axial direction of the handlebar.

### (Supplementary Note 8)

The vibration isolator according to Supplementary Note 7, wherein
both the ends of the protrusion in the width direction of the annular main body corresponding to the axial direction of the handlebar are each formed so as to gradually rise toward a center side of the protrusion.

### (Supplementary Note 9)

The vibration isolator according to any of Supplementary Notes 1 to 8, wherein
the recess is formed uniformly along the width direction of the annular main body corresponding to the axial direction of the handlebar.

### (Supplementary Note 10)

A steering comprising a handlebar, a housed component housed inside the handlebar, and a vibration isolator arranged surrounding at least part of the housed component and housed inside the handlebar together with the housed component, the vibration isolator comprising:
an annular main body made of an annular elastic member;
a plurality of protrusions formed on an outer peripheral surface of the annular main body, the protrusions protruding so as to abut on an inner surface of the handlebar; and
a plurality of recesses formed on an inner peripheral surface of the annular main body, the recesses being recessed toward the outer peripheral surface.

Although the present invention has been described above with reference to the example embodiments, the present invention is not limited to the above example embodiments. The configurations and details of the present invention can be changed in various manners that can be understood by one skilled in the art within the scope of the present invention.

### DESCRIPTION OF NUMERALS

- 1: vibration isolator
- 10: annular main body
- 11: protrusion
- 12: recess
- 20: accelerator position sensor
- 21: case
- 30: handlebar

## Claims

1. A vibration isolator comprising:
an annular main body made of an annular elastic member, the annular main body being arranged surrounding at least part of a component housed inside a handlebar, the annular main body being housed inside the handlebar together with the component;
a plurality of protrusions formed on an outer peripheral surface of the annular main body, the protrusions protruding so as to abut on an inner surface of the handlebar; and
a plurality of recesses formed on an inner peripheral surface of the annular main body, the recesses being recessed toward the outer peripheral surface.

2. The vibration isolator according to Claim 1, wherein
each of the recesses is, for one of the protrusions, formed corresponding to a part where the protrusion is formed.

3. The vibration isolator according to Claim 1 or 2, wherein
the recesses are formed on the inner peripheral surface at parts where the protrusions are formed of the annular main body.

4. The vibration isolator according to any one of Claims 1 to 3, wherein
the recesses and the protrusions are formed in substantially same outer shapes.

5. The vibration isolator according to any one of Claims 1 to 4, wherein
a thickness of the annular main body in vicinities of both ends of the protrusion and the recess corresponding to each other in a circumferential direction of the annular main body is thinner than that of another part.

6. The vibration isolator according to any one of Claims 1 to 5, wherein
the protrusions and the recesses are formed arranged at substantially equal intervals along a circumferential direction of the annular main body.

7. The vibration isolator according to any one of Claims 1 to 6, wherein
the protrusion is formed except vicinities of both ends in a width direction of the annular main body, the width direction corresponding to an axial direction of the handlebar.

8. The vibration isolator according to Claim 7, wherein
both the ends of the protrusion in the width direction of the annular main body corresponding to the axial direction of the handlebar are each formed so as to gradually rise toward a center side of the protrusion.

9. The vibration isolator according to any one of Claims 1 to 8, wherein
the recess is formed uniformly along the width direction of the annular main body corresponding to the axial direction of the handlebar.

10. A steering comprising the handlebar, a housed component housed inside the handlebar, and the vibration isolator according to any one of Claims 1 to 9 arranged surrounding at least part of the housed component and housed inside the handlebar together with the housed component.
